**Europäisches Patentamt**

**European Patent Office**

**Office européen des brevets**

(19)

(11) Numéro de publication : **0 389 382 B1**

# FASCICULE DE BREVET EUROPEEN

(12)

(45) Date de publication du fascicule du brevet :
06.05.92 Bulletin 92/19

(51) Int. Cl.⁵ : **H02G 3/04**

(21) Numéro de dépôt : **90400813.3**

(22) Date de dépôt : **23.03.90**

(54) **Gaine pour canalisation profilé pour sa réalisation et procédé de montage d'une telle gaine.**

(30) Priorité : **24.03.89 FR 8903941**

(43) Date de publication de la demande :
**26.09.90 Bulletin 90/39**

(45) Mention de la délivrance du brevet :
**06.05.92 Bulletin 92/19**

(84) Etats contractants désignés :
**AT BE CH DE DK ES FR GB IT LI LU NL SE**

(56) Documents cités :
**EP-A- 0 200 927**
**DE-A- 2 410 389**
**FR-A- 2 163 349**
**FR-A- 2 575 002**

(73) Titulaire : **INGENIERIE BOGA**
**39, quai Bérigny**
**F-76400 Fécamp (FR)**

(72) Inventeur : **Lacombe, Jean-Jacques**
**15, avenue Gambetta**
**F-76400 Fecamp (FR)**
Inventeur : **Verdure, Gérard**
**594, chemin des Ifs**
**Val aux Clercs, F-76400 (FR)**

(74) Mandataire : **Arnaud, Jean Pierre Alfred**
**Cabinet Arnaud 94 rue Saint-Lazare**
**F-75009 Paris (FR)**

EP 0 389 382 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne une gaine pour canalisations, notamment électriques, par exemple, les câbles de transmission de signaux des systèmes informatiques, les fils téléphoniques et les câbles d'alimentation raccordés au réseau. Elle concerne aussi des profilés permettant la réalisation de telles gaines, des boîtiers formés à l'aide de telles gaines, ainsi qu'un procédé de montage de gaine.

Etant donné l'utilisation de plus en plus importante de systèmes bureautiques et informatiques, il faut acheminer des câbles de plus en plus nombreux de transmission de signaux informatiques et téléphoniques à de nombreux emplacements plus ou moins éloignés, et, en outre, il faut assurer l'acheminement de câbles d'alimentation électrique à de nombreux emplacements. L'une des techniques les plus couramment utilisées est le passage des câbles dans des plinthes disposées tout autour des pièces. Il existe ainsi des systèmes de formation de conduits de passage de câbles mettant en oeuvre divers profilés qui peuvent être fixés à des cloisons et fermés par des couvercles. Diverses gaines peuvent être placées côte à côte et éventuellement solidarisées par des systèmes à vis, à agrafes, etc.

Tous les systèmes connus de plinthes présentent divers inconvénients. Par exemple, certains nécessitent un grand nombre d'éléments différents, et notamment des pinces ou agrafes qui peuvent être facilement perdues et qui ne donnent pas une solidarisation très robuste, à moins d'être présentes en grand nombre. Le temps nécessaire au montage est alors très élevé. Dans le cas de gaines ayant des parties emboîtables, il faut disposer d'outils spéciaux pour la mise en coopération des parties emboîtables, ou bien il faut appliquer une force considérable aux parties qui doivent être mises en coopération, étant donné la longueur importante des profilés utilisés. De manière générale, lorsque les gaines ont une grande robustesse, leur montage est difficile ou nécessite des outils spéciaux. Lorsque les gaines ne nécessitent pas l'application de forces importantes ou l'utilisation d'outils spéciaux, elles sont peu résistantes et se déforment facilement.

Ainsi, le document DE-A1-2 410 389 décrit une gaine pour canalisation dont une ouverture est fermée par un couvercle. Un bord du couvercle, ayant une forme d'arc de cylindre, coulisse dans une gorge de forme cylindrique complémentaire recouvrant un angle inférieur à 180°. Le bord du couvercle est ainsi retenu entre deux organes de la gaine, un organe interne et un organe externe.

Le document EP-A-0 200 927 décrit une gaine pour canalisation du type comprenant au moins deux profilés coopérant par emboîtement. Un premier profilé de cette gaine comporte aussi une nervure qui, en coupe par un plan perpendiculaire à la longueur du profilé, a une section convexe délimitée par un arc de cercle recouvrant plus de 180°, et qui est reliée au reste du profilé par une joue. Par ailleurs, les premier et deuxième profilés de cette gaine comportent des organes d'accrochage.

L'invention concerne des gaines pour canalisations d'un type très robuste, formées soit d'alliage léger, soit d'une matière plastique résistante, et ayant de nombreuses nervures donnant une rigidité élevée. Le montage ne nécessite pas de forces importantes, car il est réalisé progressivement, par mise en coopération de premiers organes d'accrochage puis, après verrouillage de ceux-ci, par mise en coopération ultérieure de seconds organes d'accrochage avec utilisation d'un long bras de levier permettant une multiplication de la force appliquée pour l'enclenchement des dispositifs d'accrochage. De cette manière, le montage est réalisé progressivement et par application de forces relativement modérées, et l'ensemble obtenu est extrêmement résistant.

Plus précisément, l'invention concerne une gaine pour canalisations, du type qui comprend au moins deux profilés coopérant par emboîtement, du type dans lequel :

– un premier profilé comporte une nervure qui, en coupe par un plan perpendiculaire à la longueur du profilé, a une section convexe délimitée par un arc de cercle recouvrant plus de 180°, et qui est reliée au reste du profilé par une joue et

– les profilés comportent au moins un organe d'accrochage, et dans laquelle

– la partie en arc de cercle du premier profilé a un dégagement dont les extrémités sont disposées sur une corde de l'arc de cercle, le dégagement étant formé dans une partie de l'arc de cercle qui n'est pas diamétralement opposée à la joue,

– le second profilé comporte une nervure en forme de coquille qui, en coupe par un plan perpendiculaire à la longueur du profilé, a une section concave délimitée par un arc de cercle ayant sensiblement le même rayon que l'arc de cercle de la nervure du premier profilé, l'arc de cercle de la coquille recouvrant un angle supérieur à 180° et qui est suffisamment grand pour que, dans une première position relative, la coquille du second profilé recouvre la section en arc de cercle de la nervure du premier profilé de part et d'autre du dégagement et retienne la coquille sur la nervure du premier profilé, et suffisamment petit pour que, dans une seconde position relative dans laquelle les deux profilés ont tourné l'un par rapport à l'autre autour du centre commun des arcs de cercles des sections de nervures, une extrémité de l'arc de cercle de la coquille soit adjacente au dégagement et l'autre extrémité de la coquille soit séparée de l'extrémité la plus proche de ladite corde par un angle inférieur à 180°, si bien que la coquille peut être séparée de la nervure du premier profilé par déplacement en translation en direction sensiblement parallèle à ladite corde, et
– le second organe d'accrochage du second profilé est destiné à venir coopérer avec le premier lors de la rotation relative des deux profilés autour du centre commun des arcs de cercles lors du passage de la seconde à la première position relative.

Le dégagement est avantageusement un plat délimité par ladite corde ou deux plats diamétralement opposés.

De préférence, les deux organes d'accrochage ont des sections en forme de harpons de sens opposés.

Il est avantageux que le matériau d'un profilé au moins soit métallique, par exemple un alliage léger à base d'aluminium.

De préférence, le profilé destiné à être placé le plus près du sol comporte, du coté tourné vers le bas dans la position de fonctionnement, un organe élastique et conducteur de l'électricité.

Il est avantageux que l'un des profilés comporte deux lèvres parallèles et tournées l'une vers l'autre de part et d'autre d'une rainure à fond sensiblement plat, et que la gaine comporte en outre un organe plat de signalisation de largeur supérieure à la distance séparant les bords des lèvres mais inférieure à celle du fond de la rainure afin que l'organe plat soit retenu par les lèvres.

Dans un mode de réalisation, le second profilé est constitué par le premier profilé d'une gaine adjacente, si bien que plusieurs gaines peuvent être formées côte à côte sous forme solidaire.

L'invention concerne aussi un profilé pour gaine pour canalisations telle que définie dans les paragraphes précédents, le profilé comportant une nervure ayant une section qui, dans un plan perpendiculaire à la longueur du profilé, a une forme en arc de cercle recouvrant un angle supérieur à 180°.

L'invention concerne aussi un boîtier comportant un corps et des côtés, comprenant un tronçon de gaine et des organes de fermeture des extrémités du tronçon.

Enfin, l'invention concerne un procédé de montage d'une gaine qui comprend le montage d'un premier profilé, ayant une nervure comprenant une section en arc de cercle, contre une paroi, la présentation d'un second profilé de manière que sa nervure comprenant une section en arc de cercle soit adjacente à la nervure correspondante du premier profilé, le déplacement du second profile en translation en direction parallèle à la corde de la nervure ayant la section convexe jusqu'à ce que les deux parties en arcs de cercles soient emboîtées l'une dans l'autre, et la rotation du second profilé autour du centre commun des arcs de cercles, avec enclenchement des organes d'accrochage des deux profilés.

D'autres caractéristiques et avantages de l'invention ressortiront mieux de la description qui va suivre, faite en référence aux dessins annexés sur lesquels :

la figure 1 est une coupe d'une gaine double selon un mode de réalisation de l'invention ;

les figures 2 à 5 sont des coupes de quatre profilés utilisés pour la réalisation du conduit supérieur de la gaine double de la figure 1 ;

les figures 6 et 7 sont des coupes de profilés utilisés pour la réalisation du conduit inférieur de la gaine double de la figure 1 ;

la figure 8 est une variante de profilé permettant la réalisation d'une gaine simple complète avec les profilés des figures 2, 6 et 7 ;

la figure 9 est une coupe illustrant une étape du procédé de montage de gaine selon l'invention ;

la figure 10 est un agrandissement d'une partie de la figure 9, représentant une caractéristique importante de l'invention ; et

la figure 11 est une coupe partielle représentant le coin inférieur droit de la gaine double de la figure 1.

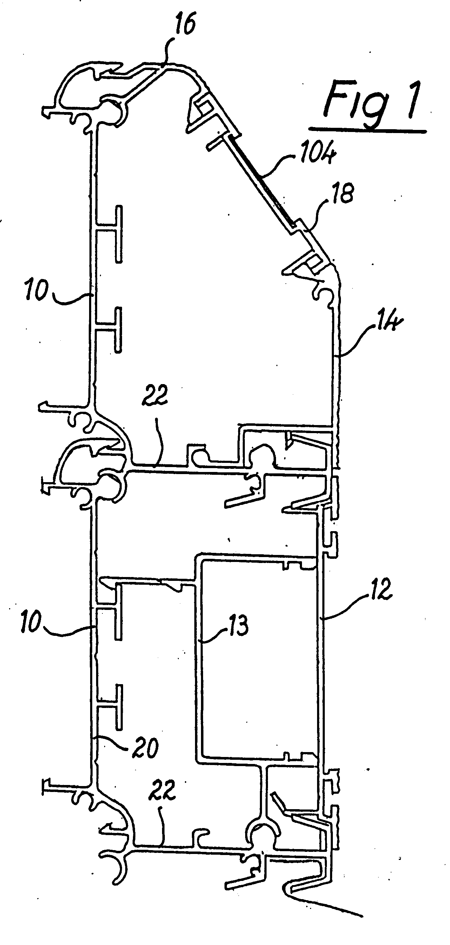

La figure 1 représente en coupe les principaux éléments d'une gaine selon l'invention. Le mode de réalisation représenté constitue une gaine double qui comporte deux conduits superposés délimités par un certain nombre de profilés.

Le conduit inférieur de la gaine de la figure 1 est formé par un premier profilé 10 délimitant essentiellement une face verticale et une face horizontale du conduit, un second profilé 10 dont la partie inférieure délimite la paroi supérieure du conduit inférieur, un couvercle avant 12 et un séparateur interne 13.

Le conduit supérieur a un côté vertical et un côté horizontal formés par un profilé 10 (une même paroi étant commune aux deux conduits), un profilé avant 14, un profilé supérieur 16 et un couvercle 18.

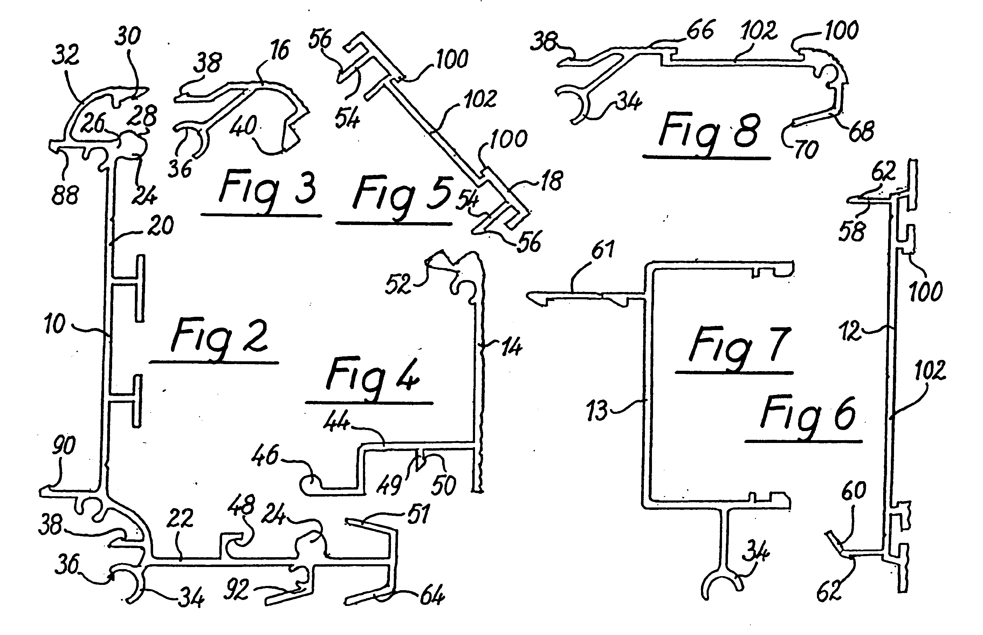

On considère maintenant plus en détail les différents éléments représentés sur la figure 1, en référence aux figures 2 à 5 d'abord qui correspondent au conduit supérieur de la gaine double de la figure 1. Le profilé 10 comporte une paroi verticale 20, destinée à être placée à proximité d'une paroi de support, telle qu'un mur ou une cloison. Une paroi horizontale 22 est raccordée à la paroi verticale 20. La partie supérieure de la paroi 20 porte une nervure 24 reliée à la paroi 20 par une joue 26 et ayant une forme circulaire, en coupe, interrompue par un dégagement 28 délimité par une corde de l'arc de cercle de la nervure 24. Au-dessus de cette dernière, dans le prolongement de la paroi 20, un organe d'accrochage 30, en forme de harpon, est rendu solidaire de la paroi 20 par une joue 32.

A sa partie inférieure, la paroi 20 comporte une seconde nervure 34 en forme de coquille, tournée vers l'arrière du profilé alors que la première nervure 24 est tournée vers l'avant. Cette nervure 34 en forme de coquille est délimitée par une surface concave qui, en coupe, est représentée par un arc de cercle 36 recouvrant un angle un peu supérieur à 180°, par exemple de l'ordre de 210° dans le cas d'un profilé d'alliage d'aluminium. Un organe d'accrochage 38 est placé au-dessus de la nervure 34, du même côté, à l'extrémité d'une joue.

Le profilé 16 représenté sur la figure 3 comporte des organes d'accrochage semblables à ceux de la partie inférieure de la paroi verticale 20. Pour cette raison, les éléments analogues portent les mêmes références numériques. Ainsi, l'organe 16 a une nervure en forme de coquille 34 ayant une surface de forme circulaire en coupe, recouvrant un angle de 210° par exemple, montée à l'extrémité d'une joue et solidaire d'une autre joue dont l'extrémité est munie d'un organe d'accrochage 38 en forme de harpon. L'organe 16 comporte en outre une autre joue qui délimite une surface 40 d'appui.

Un autre profilé, portant la référence 14, comporte un bras 44 ayant à son extrémité libre, une nervure 46 de section circulaire destinée à se loger dans une gorge 48 du profilé 10 et une joue élastique 49 destinée à coopérer par un organe d'accrochage 50 en forme de harpon avec une joue 51 dépassant de la paroi inférieure 22 du profilé 10. A son autre extrémité, le profilé 14 a une joue qui délimite une surface d'appui 52.

La figure 5 représente le profilé 18 qui comporte deux joues élastiques 54 ayant chacune, à son extrémité, un organe d'accrochage 56.

La figure 1 montre clairement comment les différents éléments des figures 2 à 5 sont assemblés pour la formation du conduit supérieur de la gaine double. La nervure en forme de coquille 34 est montée sur la nervure 24 et les organes d'accrochage 30, 38 sont en coopération alors que le profilé 14 est fixé sur la paroi inférieure 22 du profilé 10 par logement de la nervure 46 dans la gorge 48 et par coopération de l'organe d'accrochage 50 avec la joue 51 du profilé 10. De cette manière, les profilés 14 et 16 délimitent entre eux une ouverture dans laquelle vient se loger le profilé 18 dont les organes d'accrochage 56, délimités à l'extrémité des joues 54, viennent s'accrocher contre les surfaces d'appui 40 et 52 des profilés 16 et 14 respectivement.

Le conduit inférieur de la gaine double de la figure 1 comporte les profilés 12 et 13, en plus d'un profilé 10. Le profilé 12 tel que représenté sur la figure 6, comportant deux joues élastiques 58, 60 ayant chacune des organes d'accrochage 62 en forme de harpon. Ces organes d'accrochage assurent la retenue du profilé 12 à l'extrémité du bras 51 dépassant au-dessus de la paroi inférieure et à l'extrémité d'un bras élastique 64 dépassant sous la paroi inférieure 22. Le profilé 13 est monté sur le conduit par une articulation à coquille 34 s'enclenchant sur une nervure 24, et par un bras élastique 61 qui s'accroche sur une joue du profilé 10.

Dans une variante, par exemple lorsqu'une gaine à un seul conduit de section rectangulaire doit être réalisée, les profilés 10, 12 et éventuellement 13 sont associés au profilé 66 représenté sur la figure 8. Celui-ci comporte la nervure 34 en forme de coquille et l'organe d'accrochage 38, analogues à ceux de profilés 10 et 16, mais il a une longueur supérieure à celle du profilé 16 et comporte, à son extrémité antérieure, un bras élastique 68 formant une surface 70 d'appui permettant l'accrochage d'un organe 62 du profilé 12.

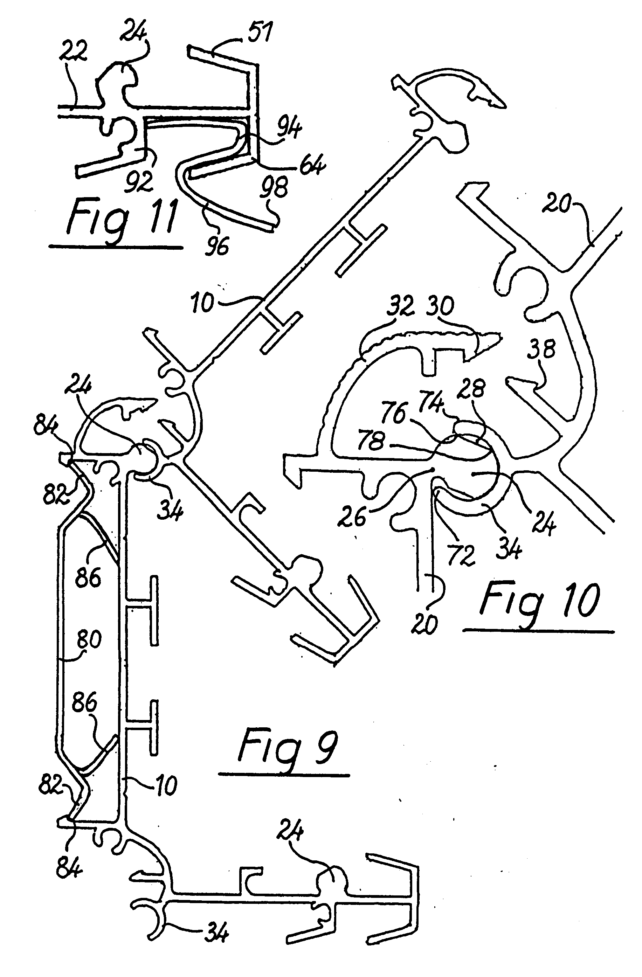

On considère maintenant plus en détail, en référence aux figures 9 et 10, le montage des profilés 10 d'une part et 10, 16 ou 66 d'autre part l'un sur l'autre. Une condition essentielle pour que les deux nervures 24 et 34 restent emboîtées lorsqu'elles sont en position telle que représentée sur la figure 1, est que la surface interne en arc de cercle en coupe recouvre un angle supérieur à 180° entre les extrémités 72 et 74 de la nervure en coquille 34. En effet, si l'angle est inférieur ou égal à 180 , la nervure en forme de coquille ne peut pas s'accrocher sur la nervure 24. Cependant, il est nécessaire que la nervure 34 puisse être montée sur la nervure 24 ou démontée de celle-ci. Selon l'invention, cette caractéristique est obtenue par formation d'un dégagement sur la nervure 24. Ce dégagement est représenté sous forme d'un plat 28, correspondant à une corde en coupe. La longueur du plat a été exagérée sur la figure 10 afin que les caractéristiques de l'invention apparaissent clairement. De même, sur la figure 10, on a indiqué qu'il restait un espace entre les deux nervures. Bien entendu, les nervures sont en contact mutuel et il n'existe pratiquement pas d'espace entre elles. On a repéré, par les références 76 et 78, les extrémités de la corde du plat. Pour que la nervure 34 puisse être montée sur la nervure 24, il faut que l'angle compris entre la joue 26 et l'extrémité 76 de la corde qui est la plus éloignée soit supérieur ou égal à l'angle de la nervure en coquille 34 qui est d'environ de 210° dans un exemple. Dans ces conditions, la nervure 34 peut être approchée de la nervure 24 par déplacement en translation de manière que l'extrémité 74 de la nervure se déplace le long du plat 28. Lorsque les surfaces de section circulaire des nervures 24 et 22 sont en contact, une rotation de la nervure 34 vers le haut sur la figure 9 provoque le passage de l'extrémité 74 au-delà de l'extrémité 76 de la corde. A partir de ce moment, la nervure en forme de coquille 34 entoure la nervure 24 sur plus de 180° et les deux nervures sont donc fixées l'une à l'autre. Bien entendu, pour que la présentation soit possible, il faut que, dans la position de présentation, l'angle compris entre l'extrémité 72 de la nervure 34 et l'extrémité 78 de la corde soit inférieur à 180°. La figure 10 indique en outre qu'un second plat peut être formé en position diamétralement opposée à celle du premier plat.

Lorsque les deux nervures 24 et 34 ont été mises en contact, le profilé supérieur peut être tourné par application d'une force relativement réduite. Après un certain angle de rotation, les organes d'accrochage 30 et 38 viennent en contact et le verrouillage de ces organes l'un sur l'autre nécessite l'application d'une force relativement élevée. Selon une caractéristique avantageuse de l'invention, la force exercée au niveau des organes d'accrochage 30 et 38 peut être très élevée, étant donné que les organes d'accrochage 30 et 38 sont proches du centre de rotation, représenté par le centre commun des arcs de cercle et des nervures 24 et 34, alors que le point d'application de la force est éloigné du centre de rotation, surtout dans le cas des profilés 10 et 66 comme représenté sur les figures 2 et 7. Dans le cas du profilé 16 de la figure 3, le coefficient multiplicateur de la force est plus réduit, mais il est encore de l'ordre de 2,5. En conséquence, il n'est pas nécessaire d'appliquer une force extrêmement importante pour assurer le verrouillage des organes les uns sur les autres.

Ainsi, on peut noter qu'aucun outil n'est nécessaire pour le montage des différents profilés les uns sur les autres.

Les nervures 24 et 34 de la partie inférieure 22 et du profilé 13 ont les mêmes caractéristiques.

La figure 9 indique comment la gaine selon l'invention est initialement montée. Avant montage d'un premier profilé 10, des supports 80 sont fixés à la cloison, à l'emplacement auquel les gaines doivent être montées ; ces supports 80 comportent des bras élastiques 82 dont les extrémités 84 sont destinées à retenir des organes d'accrochage 88 et 90 (voir figure 2) formés à la face arrière du profilé 10. Le support 80 a aussi avantageusement des doigts élastiques 86 prenant appui contre la paroi 20 du profilé 10 de manière que celui-ci soit maintenu sans jeu sur le support 80.

La partie inférieure de la figure 1 et la figure 11 représentent une caractéristique avantageuse de l'invention. La face inférieure de la paroi horizontale 22 du profilé 10 retient, entre le bras 64 et une joue 92, un organe 94 avantageusement formé d'une bande de cuivre ou de laiton qui forme une lèvre 96 qui dépasse vers l'extérieur du profilé jusqu'à une extrémité 98. De cette manière, lorsque la gaine est placée à une hauteur convenable, la lame de cuivre 94 peut être au contact du sol, par exemple d'une moquette, et permet la résolution des problèmes posés par l'électricité statique.

Les profilés représentés sont de préférence formés d'un métal, avantageusement d'un alliage léger à base d'aluminium. La technologie du filage de ces alliages permet la réalisation de toutes les joues et de tous les organes d'accrochage décrits en référence aux diverses figures. Cependant, les profilés peuvent être aussi réalisés en matière plastique. Bien entendu, l'épaisseur et la longueur des joues et les dimensions des organes d'accrochage dépendent du matériau particulier choisi pour la réalisation des profilés.

Les figures 1, 5, 6 et 8 représentent une autre caractéristique avantageuse de l'invention. On note, par exemple sur la figure 5, que le profilé 18, constituant un couvercle pour le conduit supérieur de la gaine double, a deux lèvres 100 tournées l'une vers l'autre et recouvrant une rainure 102 à fond sensiblement plat. La distance séparant les bords des lèvres est inférieure à la largeur du fond de la rainure, et un organe plat 104 peut ainsi être retenu dans la rainure par les lèvres 100. Un tel organe plat peut être utilisé pour la signalisation, soit sous forme d'inscriptions, soit sous forme de codes divers, notamment de couleurs. Dans les parties ne nécessitant pas un tel code, un organe dont les caractéristiques décoratives correspondent à l'environnement, peut être glissé dans la rainure afin qu'il permette une meilleure intégration des gaines à ce qui les entoure. Des dispositions analogues existent sur les profilés 12 et 66 des figures 6 et 8.

Bien qu'on ait indiqué que le dégagement de la nervure 24 était délimité, en coupe, par une corde, seule la position des extrémités de la corde est importante, dans la mesure où le dégagement comporte au moins la partie externe à la corde.

Bien qu'elles ne soient pas décrites en détail dans le présent mémoire, d'autres caractéristiques, connues de l'homme du métier, sont avantageusement incorporées aux profilés utilisés : parties à surface ondulée (joue 32, profilé 16, etc.), partie à séparer par cassure (bras 61, joue 60, etc.), parties diverses de fixation par enclenchement élastique, accrochage, serrage, etc.

L'invention concerne aussi des boîtiers formés par découpe d'une gaine à un seul conduit ou à deux conduits de manière qu'elle forme un tronçon dont les extrémités ouvertes peuvent être fermées de toute manière convenable. Par exemple, deux parois d'extrémité peuvent être tirées l'une vers l'autre, par exemple par un dispositif à ridoir ou peuvent être collées.

Bien entendu, les profilés peuvent aussi comporter diverses autres caractéristiques permettant notamment l'accrochage d'appareillages ou d'accessoires convenables. On a ainsi représenté des crochets dépassant de la paroi verticale 20, et une joue se terminant par un organe d'accrochage, au-dessous de la paroi horizontale 22. Il s'agit simplement d'exemples d'éléments utilisables.

Il peut être avantageux par exemple de placer des cloisons partielles permettant, dans un même conduit, la séparation de câbles différents, par exemple des câbles transmettant des signaux téléphoniques et des câbles transmettant un courant d'alimentation.

Une autre caractéristique de l'invention est son aspect modulaire. Lorsque par exemple une gaine à un seul conduit a été montée à l'aide des profilés 10, 14, 16 et 18, ces trois derniers profilés peuvent être démontés, et des profilés 10, 12 et 13 peuvent être montés sur le profilé 10 initial, avant remontage des profilés 14, 16 et 18 qui ont été démontés. De cette manière, une gaine à un seul conduit a été transformée en gaine à deux conduits. Cette opération peut être répétée, pour l'obtention de tout nombre voulu de conduits.

Le séparateur 13 n'est qu'un exemple de dispositif qui peut être monté dans un conduit afin qu'il facilite le montage de câbles ou permette la séparation des lignes de signaux à basse tension et des câbles d'alimentation en énergie. D'autres profilés peuvent aussi être utilisés. Par exemple, des profilés 10 peuvent avoir une partie horizontale 22 qui est raccourcie, lorsque des conduits peu profonds suffisent.

Ainsi, l'invention concerne un système à gaines pour canalisations dont le montage est simple, rapide et commode, qui ne nécessite pas d'outillage spécial pour son montage, qui est de type modulaire et qui s'intègre bien aux différents environnements dans lesquels il peut être utilisé, notamment grâce aux rainures de logement d'organes de signalisation ou décoratifs.

**Revendications**

1. Gaine pour canalisations du type qui comprend au moins deux profilés coopérant par emboîtement, du type dans lequel :
   – un premier profilé (10) comporte une nervure (24) qui, en coupe par un plan perpendiculaire à la longueur du profilé a une section convexe délimitée par un arc de cercle recouvrant plus de 180°, et qui est reliée au reste du profilé par une joue (26), et
   – les profilés comportent au moins un organe d'accrochage (30, 38), et caractérisée en ce que
   – la partie en arc de cercle du premier profilé a un dégagement (28) dont les extrémités sont disposées sur une corde de l'arc de cercle, le dégagement étant formé dans une partie de l'arc de cercle qui n'est pas diamétralement opposée à la joue,
   – le second profilé (10, 13) comporte une nervure (34) en forme de coquille qui, en coupe par un plan perpendiculaire à la longueur du profilé, a une section concave délimitée par un arc de cercle ayant sensiblement le même rayon que l'arc de cercle de la nervure du premier profilé, l'arc de cercle de la coquille recouvrant un angle supérieur à 180° et qui est suffisamment grand pour que, dans une première position relative, la coquille du second profilé recouvre la section en arc de cercle de la nervure (24) du premier profilé de part et d'autre du dégagement et retienne la coquille sur la nervure du premier profilé, et suffisamment petit pour que, dans une seconde position relative dans laquelle les deux profilés ont tourné l'un par rapport à l'autre autour du centre commun des arcs de cercles des sections de nervures, une extrémité de l'arc de cercle de la coquille soit adjacente au dégagement et l'autre extrémité de la coquille soit séparée de l'extrémité la plus proche de ladite corde par un angle inférieur à 180°, si bien que la coquille peut être séparé de la nervure du premier profilé par déplacement en translation en direction sensiblement parallèle à ladite corde, et
   – le second organe d'accrochage (38) du premier profilé est destiné à venir coopérer avec le premier lors de la rotation relative des deux profilés autour du centre commun des arcs de cercles lors du passage de la seconde à a première position relative.

2. Gaine selon la revendication 1, caractérisée en ce que le dégagement est un plat (28) délimité par ladite corde.

3. Gaine selon l'une des revendications 1 et 2, caractérisée en ce que les deux organes d'accrochage (30, 38) ont des sections en forme de harpons de sens opposés.

4. Gaine selon l'une quelconque des revendications précédentes, caractérisée en ce que le matériau d'un profilé au moins est métallique, notamment un alliage léger à base d'aluminium.

5. Gaine selon l'une quelconque des revendications précédentes, caractérisée en ce que le profilé (10) destiné à être placé le plus près du sol comporte, du coté tourné vers le bas dans la position de fonctionnement, un organe (94) élastique et conducteur de l'électricité.

6. Gaine selon l'une quelconque des revendications précédentes, caractérisée en ce que l'un des profilés (18) comporte deux lèvres parallèles (100) tournées l'une vers l'autre de part et d'autre d'une rainure (102) à fond sensiblement plat, et la gaine comporte en outre un organe plat (104) de signalisation de largeur supérieure à la distance séparant les bords des lèvres mais inférieure à celle du fond de la rainure afin que l'organe plat soit retenu par les lèvres.

7. Gaine selon l'une quelconque des revendications précédentes, caractérisée en ce que le second profilé (10) est constitué par le premier profilé (10) d'une gaine adjacente, si bien que plusieurs gaines peuvent être formées côte à côte sous forme solidaire.

8. Profilé pour gaine pour canalisations selon l'une quelconque des revendications précédentes, caractérisé en ce qu'il comporte une nervure (24, 34) ayant une section qui, dans un plan perpendiculaire à la longueur du profilé, a une forme en arc de cercle recouvrant un angle supérieur à 180°.

9. Boîtier comportant un corps et des côtés, caractérisé en ce qu'il comprend un tronçon de gaine selon l'une quelconque des revendications 1 à 7 et des organes de fermeture des extrémités du tronçon.

10. Procédé de montage d'une gaine selon l'une quelconque des revendications 1 à 7, caractérisée en ce qu'il comprend le montage d'un premier profilé (10), ayant une nervure (24) comprenant une section en arc de cercle, contre une paroi, la présentation d'un second profilé (16) de manière que sa nervure (34) comprenant une section en arc de cercle soit adjacente à la nervure correspondante (24) du premier profilé, le déplacement du second profilé en translation en direction parallèle à la corde (28) de la nervure ayant la section convexe jusqu'à ce que les deux parties en arcs de cercles soient emboîtées l'une dans l'autre, et la rotation du second profilé (16) autour du centre commun des arcs de cercles, avec enclenchement des organes d'accrochage (30, 38) des deux profilés.

**Patentansprüche**

1. Rohrkanal, enthaltend wenigstens zwei ineinandergreifende Profile, wobei:
– ein erstes Profil (10) eine Rippe (24) enthält, die, in Schnittansicht senkrecht zur Länge des Profils betrachtet, einen konvexen Abschnitt aufweist, der durch einen mehr als 180° umfassenden Kreisbogen begrenzt ist, und die mit dem Rest des Profils über eine Wange (26) verbunden ist, und
– die Profile wenigstens ein Hakenelement (30, 38) enthalten, dadurch gekennzeichnet, daß
– der kreisbogenförmige Teil des ersten Profils eine Aussparung (28) umfaßt, deren Enden auf einer Sehne des Kreisbogens angeordnet sind, wobei die Aussparung in einem Teil des Kreisbogens ausgebildet ist, der der Wange nicht diametral gegenüberliegt,
– das zweite Profil (10, 13) eine muschelförmige Rippe (34) enthält, die, in Schnittansicht senkrecht zur Länge des Profils betrachtet, einen konkaven Abschnitt aufweist, der durch einen dem Radius der Rippe des ersten Profils umfangsmäßig entsprechenden Kreisbogen begrenzt ist, wobei der Kreisbogen der Muschel einen 180° übersteigenden Winkel umfaßt, und die groß genug gewählt ist, damit in einer ersten Relativposition die Muschel des zweiten Profils einerseits den kreisbogenförmigen Abschnitt der Rippe (24) des ersten Profils und andererseits die Aussparung abdeckt, und die ausreichend klein gewählt ist, damit in einer zweiten Relativposition, in der sich die beiden Profile relativ zueinander um den gemeinsamen Mittelpunkt der Kreisbögen der Rippenabschnitte gedreht haben, ein Ende des Kreisbogens der Muschel an die Aussparung angrenzt und das andere Ende der Muschel von dem der Sehne nächstgelegenen Ende durch einen unter 180° liegenden Winkel getrennt ist, so daß die Muschel von der Rippe des ersten Profils durch Eine Translationsbewegung in einer zur Sehne im wesentlichen parallelen Richtung getrennt werden kann, und
– das zweite Hakenelement (38) des zweiten Profils dazu bestimmt ist, mit dem ersten während der Relativdrehung der beiden Profile um den gemeinsamen Mittelpunkt der Kreisbögen bei der Bewegung aus der zweiten in die erste Relativposition zusammenzuwirken.

2. Kanal nach Anspruch 1, dadurch gekennzeichnet, daß die Aussparung als ein durch die Sehne begrenzter Teller (28) ausgebildet ist.

3. Kanal nach einem der Ansprüche 1 und 2, dadurch gekennzeichnet, daß die zwei Hakenelemente (30, 38) Abschnitte in Form von in gegensätzliche Richtungen weisende Haken aufweisen.

4. Kanal nach einem der vorhergehenden Ansprüche, dadurch gekennzeichnet, daß das Material wenigstens eines Profils metallisch, insbesondere eine leichte Legierung auf Aluminiumbasis, ist.

5. Kanal nach einem der vorhergehenden Ansprüche, dadurch gekennzeichnet, daß das zur Anordnung unmittelbar am Boden bestimmte Profil (10) auf der in Funktionsstellung nach unten weisenden Seite ein elastisches und elektrisch leitfähiges Element (94) enthält.

6. Kanal nach einem der vorhergehenden Ansprüche, dadurch gekennzeichnet, daß eines der Profile (18) einerseits zwei einander zugewandte parallele Lippen (100) und andererseits eine am Boden im wesentlichen flache Rille (102) aufweist, wobei der Kanal weiterhin ein flaches Signalelement (104) enthält, das größer als die die Kanten der Lippen trennende Entfernung und kleiner als die Länge des Bodens der Rille ausgebildet ist, so daß das flache Element durch die Lippen gehalten wird.

7. Kanal nach einem,,der vorhergehenden Ansprüche, dadurch gekennzeichnet, daß das zweite Profil (10) durch das erste Profil (10) eines angrenzenden Kanals gebildet wird, so daß eine Mehrzahl von Kanälen nebeneinander fest miteinander verbunden sein können.

8. Profil für einen Rohrkanal nach einem der vorhergehenden Ansprüche, dadurch gekennzeichnet, daß es eine Rippe (24, 34) enthält, die einen Abschnitt aufweist, der, in Schnittansicht senkrecht zur Länge des Profils betrachtet, als ein mehr als 180° umfassender Kreisbogen ausgebildet ist.

9. Gehäuse, enthaltend einen Körper und Seitenwände, dadurch gekennzeichnet, daß es einen Kanalabschnitt nach einem der Ansprüche 1 bis 7 sowie Elemente zum Verschließen der Enden des Abschnitts enthält.

10. Verfahren zur Montage eines Kanals nach einem der Ansprüche 1 bis 7, dadurch gekennzeichnet, daß sie folgende Verfahrensschritte enthält: an einer Wand wird ein erstes Profil (10) montiert, das eine Rippe (24) aufweist, die einen kreisbogenförmigen Abschnitt enthält, ein zweites Profil (16) wird derart angeordnet, daß dessen einen kreisbogenförmigen Abschnitt aufweisende Rippe (34) an die entsprechende Rippe (24) des ersten Profils angrenzt, das zweite Profil wird in einer zur Sehne (28) der einen konvexen Abschnitt enthaltenden Rippe parallelen Richtung versetzt, bis die beiden kreisbogenförmigen Teile ineinander greifen, und das zweite Profil (16) wird um den gemeinsamen Mittelpunkt der Kreisbögen gedreht, wobei die Hakenelemente (30, 38) der beiden Profile verklammert sind.

**Claims**

1. A conduit for lines, of the kind including at least two extrusions to be interlocked, and in which :
   – a first extrusion (10) includes a rib (24) which has a convex cross-section in a plane normal to extrusion length, said cross-section being defined by an arc of a circle greater than 180°, said rib being connected by a web (26) to the remaining of extrusion, and
   – said extrusions include at least one hooking member (30, 38), and characterized in that
   – the portion of said first extrusion which is defined by said arc of circle has a clearance (28) the ends of which are on a chord of said arc of circle, said clearance being defined in a portion of said arc of circle which is not diametrally opposite to said web,
   – the second extrusion (10, 13) includes a rib (34) having the shape of a shell which has a concave cross-section in a plane normal to the extrusion length, said cross-section being defined by an arc of a circle having substantially the same radius as said arc of circle of first extrusion rib, the arc of circle of said shell having an angle greater than 180°, said angle being great enough to provide for second extrusion shell, in a first relative position, to overlap said cross-section defined by said arc of circle of the rib (24) of said first extrusion on either side of said clearance and for retaining said shell on said first said extrusion rib, said angle being small enough to provide for one end of said arc of circle of said shell, in a second relative position in which said two extrusions have relatively rotated about the common center of said arcs of circle of rib cross-sections, to be adjacent to said clearance and the other end to be spaced from the nearest end of said chord by an angle smaller than 180°, so that said shell can be separated from first extrusion rib by translating in a direction substantially parallel to said chord, and
   – the second hooking member (38) of said second extrusion is for engaging said first hooking member during relative rotation of said two extrusions around said common center of said arcs of circles during transition from the second to the first relative position.

2. A conduit according to claim 1, characterized in that said clearance is a flat (28) defined by said chord.

3. A conduit according to any claim 1 or 2, characterized in that said two hooking members (30, 38) have harpoon-shaped cross-sections having opposite directions.

4. A conduit according to anyone of preceding claims, characterized in that material of at least one extrusion is a metal, especially a light aluminium alliage.

5. A conduit according to anyone of preceding claims, characterized in that said extrusion (10) arranged to be the nearest to the floor includes an electrically conducting resilient member (94) at its bottom side during use.

6. A conduit according to any one of preceding claims, characterized in that one of said extrusions (18) includes two opposite parallel lips (100) at the sides of a groove (102) having a substantially flat bottom, and said conduit further includes a flat signalling member (104) having a width greater than the distance included between lip edges but smaller than groove bottom width so that said flat member is retained by said lips.

7. A conduit according to any one of preceding claims, characterized in that said second extrusion (10) constitutes the first extrusion (10) of an adjacent conduit, so that several conduits may be interlocked adjacently.

8. An extrusion for a line conduit according to anyone of preceding claims, characterized in that it includes a rib (24, 34) having a cross-section which, in a plane normal to extrusion length, has the shape of an arc of circle having an angle greater that 180°.

9. A casing including a body and sides, characterized in that it includes a length of a conduit according to anyone of claims 1 to 7, and members for closing ends of said length.

10. A process for assembling a conduit according to anyone of claims 1 to 7, characterized in that it includes the steps of mounting a first extrusion (10) including a rib (24) having a cross-section defined by an arc of circle against a wall, presenting a second extrusion (16) so that its rib (34) having a cross-section defined by an arc of circle is adjacent to the corresponding rib (24) of said first extrusion, translating said second extrusion in a direction parallel to said chord (28) of said rib having a convex cross-section until the two portions defined by said arcs of circles are encased one in the other, and rotating said second extrusion (16) about the common center of said arcs of circles for engaging hooking members (30, 38) of said two extrusions.

Fig 1

EP 0 389 382 B1

**Fig 3**

**Fig 5**

**Fig 2**

**Fig 4**

**Fig 8**

**Fig 7**

**Fig 6**

Fig 11

Fig 10

Fig 9